# EUROPEAN PATENT SPECIFICATION

(11) **EP 4 172 230 B1**
(45) Date of publication and mention of the grant of the patent: **22.05.2024**
(21) Application number: 21733140.4
(22) Date of filing: 21.06.2021
(51) Int. Cl.: C08G 18/64, C08G 79/025, C08G 18/10, C08G 18/48, C08G 18/73

(54) **POLYURETHANES BASED ON SIDE CHAIN DIOL- AND DIAMINOPOLYPHOSPHAZENES AND THEIR HYDROGELS**
POLYURETHANE AUF DER BASIS VON SEITENKETTIGEN DIOL- UND DIAMINOPOLYPHOSPHAZENEN UND DEREN HYDROGELEN
POLYURÉTHANES BASÉS SUR DES DIOL- ET DIAMINOPOLYPHOSPHAZÈNES À CHAÎNE LATÉRALE ET LEURS HYDROGELS

(30) Priority: 26.06.2020 EP 20182537
(43) Date of publication of application: 03.05.2023
(73) Proprietor: Covestro Deutschland AG, 51373 Leverkusen (DE)
(72) Inventor: HECKROTH, Heike, 51519 Odenthal (DE); RICHTER, Frank, 51373 Leverkusen (DE); SUETTERLIN, Jan, 51061 Köln (DE); TEASDALE, Ian, 4040 Linz (AT); BRUEGGEMANN, Oliver, 4040 Linz (AT); BACHMANN, Jan-Patrick, 4040 Linz (AT); ULBRICHT, Christoph, 4040 Linz (AT); KIMESWENGER, Susanne, 4040 Linz (AT); HARTMANN, Florian, 4040 Linz (AT)
(74) Representative: Levpat
(86) International application number: PCT/EP2021/066802
(87) International publication number: WO 2021/259848

(56) References cited:
- CN-A- 103 804 628
- JP-A- S54 119 544
- KR-A- 20030 054 566
- US-A1- 2017 183 453

## Description

The present invention relates to polyphosphazenes, polyurethanes based on these polyphosphazenes, methods for their manufacture and hydrogels based on the polyurethanes.

The invention further relates to the use of the hydrogels in medical, veterinary and agricultural applications.

Poly(organo)phosphazenes are a family of inorganic molecular hybrid polymers with very diverse properties. The article "Preparation of polyphosphazenes: a tutorial review" by S. Rothemund and I. Teasdale, Chem. Soc. Rev., 2016, 45, 5200 gives an overview over the field.

WO 2013/190260 A2 discloses substituted poly(phosphazene) compounds comprising a combination of units having one or more of the structures (i) to (iii) 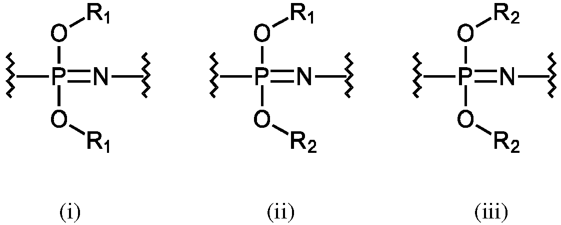 wherein: the combination comprises R₁ and R₂; each Ri, is independently an optionally substituted alkyl- or alkyl ether-based side chain containing an isocyanate-reactive moiety, an epoxide- reactive moiety, an amine-reactive moiety, a supramolecular noncovalent bonding moiety, or combinations thereof; and each R₂ is independently an optionally substituted alkyl- or alkyl ether- based side chain containing nitro, nitramine, nitrate ester, azide, an ammonium compound moiety with energetic counter-ion, or combinations thereof. Methods of making the compounds are also described.

WO 2015/192158 A1 relates to a polymer for tissue engineering from biodegradable polyphosphazenes, having photopolymerizable side groups, wherein the side groups of the polyphosphazenes are formed exclusively from amino acids and/or amino acid derivatives, which are bonded to the backbone of the polyphosphazene via the amino group of the amino acid and to a spacer attached to the acid group with a carbon chain of length m, which has a vinyl group at the free end, wherein m = 0 to m = 10.

Hydrogels are crosslinked 3-D polymeric networks with high water and biological liquids uptake capacity. They can structurally resemble soft tissue or a cell of the body and hydrogels have a wide application area such as drug delivery systems, tissue engineering, and wound dressings. Among these biomedical applications, polyurethane-based hydrogels have been widely used in drug release applications owing to their good mechanical strength and easy applicability to drugs and they are suitable for drug encapsulation, transportation and release. Despite their formal similarity to peptide bonds, the urethane groups in polyurethanes have been found challenging to biologically degrade. A polyurethane hydrogel with increased susceptibility to hydrolysis would therefore be desirable.

Accordingly, a polyphosphazene as described in claim 1 is provided. This polyphosphazene bears NCO-reactive hydrogen atoms and can be cross-linked with polyisocyanates; this is the subject of claim 7 and method claim 8 The method according to claim 6 concerns the synthesis of polyphosphazenes with NCO-reactive hydrogen atoms. Hydrogels obtained from such polyurethanes are the subject of claim 11. Their uses are covered in claims 13 and 14.

Advantageous embodiments are the subject of the dependent claims. They may be combined freely unless the context clearly indicates otherwise.

A polyphosphazene according to the invention has the general formula (I): 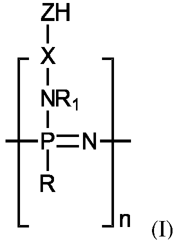 Where each radical ZH is, independent of other radicals ZH, a group comprising an NCO-reactive hydrogen atom; each radical X is, independent of other radicals X, an organic rest; each radical R₁ is, independent of other radicals Ri, hydrogen or an organic radical; each radical R is, independent of other radicals R, halogen, an organic radical or the radical group NR₁-X-ZH and n is a positive integer.

At least one radical X comprises one of the following groups: -B-CH₂-CH₂-, -Si-CH₂-CH₂- or -S-CH₂-CH₂-, wherein the -CH₂-CH₂- groups are located between the B, Si or S atoms and an N atom to which radicals R₁ are bond. This structural feature can be created by addition of a molecule with a B-H, Si-H or S-H bond to a C=C double bond. In the case of an S-H bond this may be designated as a thiol-ene addition. The N atom to which radicals R₁ are bond connects to a P atom of the polyphosphazene chain. Ultimately, the C=C double bond precursor group may be bond to the polyphosphazene chain before addition of the B/Si/S-H group containing compound.

Without wishing to be bound by theory it is believed that the polyphosphazenes according to the invention advantageously combines the reactivity with NCO groups to form polyurethanes and the possibility of hydrolytic cleavage to give a degradable or even bio-degradable polymer. Furthermore, such polyphosphazenes and polyurethanes may be useful in the formation of hydrogels. The hydrogels themselves may also be degradable by hydrolysis. The degradation may be such that after placing the hydrogel in a mechanical shaker and immersed in phosphate buffer (pH 7.4) at 37 °C for five weeks the weight of the hydrogel is ≥ 65% to ≤ 75% of the original weight.

The degree of polymerization may be such that the number n in formula (I) is ≥ 3 to ≤ 1000 and preferably ≥ 10 to ≤ 100.

As used herein, the term "NCO-reactive hydrogen atom" denotes a hydrogen atom in the molecule which is able to react with an isocyanate functional group. The most common NCO-reactive hydrogen atoms are those bond to nitrogen, oxygen or sulfur atoms.

In the individual radicals ZH the placeholder "Z" is meant to denote a heteroatom such as nitrogen, oxygen or sulfur to which the NCO-reactive hydrogen atom is bonded. "Z" is not meant to comprise further atoms which are part of the connection to the NR₁ radical. These atoms would be grouped into "X".

The individual radicals Ri, in the event that they are an organic radical, may be branched or unbranched and may comprise substituted or unsubstituted alkylene groups and/or substituted or unsubstituted arylene groups. It is preferred that R₁ is hydrogen. The introduction of the NR₁ moiety may be achieved by synthetic pathways where an amide nucleophile substitutes a leaving group such as a chloride anion previously bond to the phosphorus atom.

The individual radicals R, in the event that they are an organic radical, may be branched or unbranched and may comprise substituted or unsubstituted alkylene groups and/or substituted or unsubstituted arylene groups. It is preferred that the individual radicals R are the radical group NR₁-X-ZH.

The individual radicals R and R₁ may comprise hydrophilic moieties such as polyether groups or ionically charged groups.

In one embodiment at least one radical ZH is a hydroxyl group, a primary amino group or a secondary amino group. Preferred are the cases where all radicals ZH are hydroxyl groups or all radicals ZH are aliphatic primary or secondary amino groups.

In another embodiment at least one radical X comprises one of the following groups: -(CH₂)ₘ-B-, -(CH₂)ₘ-Si- or -(CH₂)ₘ-S- with m being an integer from 1 to 16, wherein the -(CH₂)ₘ- groups are located between the B, Si or S atoms and a radical ZH. This structural feature can be created starting from a compound with a HZ-(CH₂)ₘ-B/Si/S-H moiety which is then added to the polyphosphazene chain bearing a C=C double bond. Preferred values for m are ≥ 2 to ≤ 10. Particularly preferred are groups derived from mercaptoalkanols with 2, 3, 4, 5 or 6 carbon atoms or groups derived from mercaptoalkaneamines with 2, 3, 4, 5 or 6 carbon atoms.

In another embodiment at least one radical X-ZH comprises the group -(CH₂)ₘ-C(=O)-O-(CH₂)ₒ-S-(CH₂)ₚ-OH or -(CH₂)ₘ-C(=O)-O-(CH₂)ₒ-S-(CH₂)ₚ-NH₂ with m, o and p independently being an integer from 1 to 16. This structural feature in the general formula (I) may be created by the reaction of a mercaptoalkanol or mercaptoalkaneamine with an amino acid ester where the alcohol portion of the ester furthermore has a C=C double bond. Preferred values for m, o and p are, independent of each other, ≥ 2 to ≤ 10. Particularly preferred are groups derived from mercaptoalkanols or mercaptoalkaneamines with 2, 3, 4, 5 or 6 carbon atoms.

In another embodiment the radical group NR₁-X comprises an ester of an α-amino acid as a structural unit. Preferred are glycine esters, alanine esters, valine esters, isoleucine esters, leucine esters, methionine esters and phenylalanine esters. A preferred alcohol moiety is the C₃ moiety derived from allyl alcohol.

The present invention also concerns a method of manufacturing a polyphosphazene comprising the structural unit according to general formula (II), the method comprising reacting a C=C double bond-carrying compound comprising the structural unit of general formula (III) with an element-hydrogen bond-carrying compound according to general formula H-E-L-ZH: 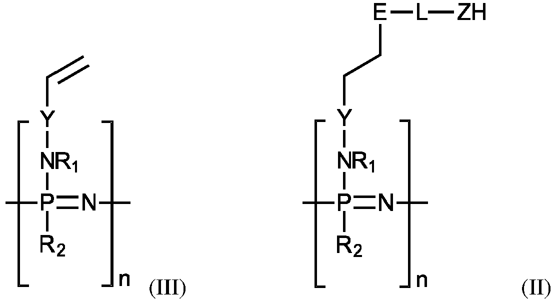 where: each radical E is, independent of other radicals E, B, Si or S; each radical L is, independent of other radicals L, an organic radical; each radical ZH is, independent of other radicals ZH, a group comprising an NCO-reactive hydrogen atom; each radical R₁ is, independent of other radicals Ri, hydrogen or an organic radical; each radical R₂ is, independent of other radicals R₂, halogen, an organic radical or the radical group NR₁-Y-; each radical Y is, independent of other radicals Y, an organic rest and n is a positive integer.

The target molecule (II) may be seen as a case of a polyphosphazene of formula (I) where the radical X is the group Y-CH₂-CH₂-E-L. The reaction of H-E-L-ZH with (III) may be described, depending on the nature of E, a hydroboration, hydrosilylation or thiol-ene addition. Particularly preferred are mercaptoalkanols or mercaptoalkaneamines with 2, 3, 4, 5 or 6 carbon atoms as H-E-L-ZH.

The degree of polymerization may be such that the number n in formulae (II) and (III) is ≥ 3 to ≤ 1000 and preferably ≥ 10 to ≤ 100. The definitions and preferred embodiments for R correspond to those outlined in conjunction with formula (I) above and shall not be repeated in the interest of brevity. Likewise, the definitions of R₂ are preferably the same as for R in conjunction with formula (I) above.

The radical Y is preferably comprises an ester group with the carbonyl C atom in α-position to the N atom bearing R₁.

The reaction from (II) to (III) may take place under irradiation with UV light and/or in the presence of radical starters or catalysts if desired.

A polyurethane polymer can be obtained by reacting a polyphosphazene (I) according to the invention with a polyisocyanate. Preferably the polyphosphazene is of the structure (II). Examples for suitable polyisocyanates include methylene diphenyl diisocyanate (MDI), methylene dicyclohexyl diisocyanate (H12-MDI), polymeric MDI, toluylene diisocyanate (TDI), xylylene diisocyanate (XDI), pentamethylene diisocyanate (PDI), hexamethylene diisocyanate (HDI), isophorone diisocyanate (IPDI) and a mixture comprising at least two of the aforementioned polyisocyanates. Further suitable polyisocyanates include the prepolymers, isocyanurates, iminooxadiazinediones, allophanates, biurets and uretdiones of the afore-mentioned polyisocyanates. The polyurethane polymer may include polyol-derived building blocks different from polyphosphazenes (I) such as polyether polyol or polyester polyol building blocks, if desired. The polymer may be unfoamed or foamed material.

A method of manufacturing a polyurethane polymer comprises reacting a polyphosphazene (I) according to the invention with a polyisocyanate. Preferably the polyphosphazene is of the structure (II). Reference is made to the polyisocyanates mentioned above. The reaction mixture comprising the polyphosphazene (I) and the polyisocyanate may furthermore include polyester polyols and/or polyether polyols. With respect to catalysts, tin-free catalysts are preferred, especially if the polyurethane is to be used in medical applications. The NCO index (molar ratio of NCO groups to NCO-reactive H-atoms) in the reaction mixture may, for example, be in a range of 90 to 110. If desired, chemical and/or physical blowing agents may be added to the reaction mixture. Mechanical frothing of the reaction mixture is also possible.

In the event that the polyphosphazene comprises hydrophilic moieties, an aqueous preparation of the polyphosphazene may be reacted with the polyisocyanate. This allows for the in situ formation of a hydrogel. Alternatively or additionally, an aqueous preparation of the polyisocyanate may be used. However, careful reaction timing would then be required owing to the reactivity of polyisocyanates with water.

In an embodiment of the polyurethane polymer or the method of its manufacture the polyisocyanate is an NCO-terminated prepolymer obtained by the reaction of a monomeric polyisocyanate and a polyether polyol. Polyether polyols are advantageous as their hydrophilicity facilitates the formation of hydrogels. Preferred are poly(oxyethylene) and poly(oxyethylene-co-propylene) polyols such as those obtained via double metal cyanide (DMC) catalysis. Particularly preferred are polyether polyols with ≥ 60 weight-% or ≥ 70 weight-% of ethylene oxide units, based on the total weight of the polyether polyol. Hydroxyl numbers (DIN 53240) of the polyol may be in the range of ≥ 20 mg KOH/g to ≤ 250 mg KOH/g, preferably ≥ 25 mg KOH/g to ≤ 50 mg KOH/g.

The polyol is preferably started on a short-chained polyalkylene oxide, for example on a glycerine-started poly(oxypropylene)triol with a hydroxyl number of ≥ 250 mg KOH/g to ≤ 400 mg KOH/g or a propylene glycol-started poly(oxypropylene)diol with a hydroxyl number of > 200 mg KOH/g to ≤ 300 mg KOH/g.

With respect to the monomeric polyisocyanate, aliphatic diisocyanates such as pentamethylene diisocyanate, hexamethylene diisocyanate, isophorone diisocyanate, methylene dicyclohexyl diisocyanate and their isocyanurates, iminooxadiazinediones, allophanates, biurets and uretdiones are preferred. The NCO content of the prepolymer (DIN EN ISO 11909) may be in a range of ≥ 2% to ≤ 5%.

In another embodiment of the polyurethane polymer or the method of its manufacture the polyether polyol is a random copolymer of an alkylene oxide and a comonomer selected from: lactides, glycolides, cyclical dicarboxylic acid anhydrides and mixtures of at least two of the aforementioned compounds. These polyols have been found to be biodegradable owing to the incorporation of the comonomers. Details, including their synthesis, can be found in the published patent application WO 2013/092504 A1. It is preferred that the alkylene oxide is ethylene oxide and/or a mixture of ethylene oxide and propylene oxide. Hydroxyl numbers (DIN 53240) of the polyol may be in the range of > 20 mg KOH/g to ≤ 250 mg KOH/g, preferably ≥ 25 mg KOH/g to ≤ 50 mg KOH/g.

The polyol is preferably started on a short-chained polyalkylene oxide, for example on a glycerine-started poly(oxypropylene)triol with a hydroxyl number of ≥ 250 mg KOH/g to ≤ 400 mg KOH/g or a propylene glycol-started poly(oxypropylene)diol with a hydroxyl number of ≥ 200 mg KOH/g to ≤ 300 mg KOH/g. The number average molecular weight of the polyol, as determined by gel permeation chromatography (THF as eluent, polystyrene standards), may be ≥ 200 g/mol to ≤ 10000 g/mol and preferably ≥ 1000 g/mol to ≤ 8000 g/mol.

The comonomer content may be ≥ 5 weight-% to ≤ 40 weight%, preferably > 10 weight-% to ≤ 30 weight%, based on the total weight of the polyether polyol.. The comonomers may be used in their monomeric, dimeric, trimeric or polymeric forms, for example as dilactide in the case of lactides.

A hydrogel can be obtained by contacting a polyphosphazene (I) according to the invention and/or a polyurethane according to the invention with water. This is easily achievable by immersing the polyphosphazene or polyurethane in water. The water may be buffered, for example to a pH of 7.4.

In an embodiment the hydrogel further comprises, distributed within the hydrogel, a pharmaceutical compound, a pesticide, a herbicide, a pheromone or a combination of at least two of the aforementioned compounds.

Suitable pharmaceutical compounds include:
1. Anti-infectives, such as antibiotics, including penicillin, tetracycline, chlortetracycline bacitracin, nystatin, streptomycin, neomycin, polymyxin, gramicidin, oxytetracycline, chloramphenicol, and erythromycin; sulfonamides, including sulfacetamide, sulfamethazine, sulfadiazine, sulfamerazine, sulfamethizole and sulfisoxazole; antivirals, including idoxuridine; and other anti-infectives including nitrofurazone and sodium propionate.
2. Anti-allergenics such as antazoline, methapyrilene, chlorpheniramine, pyrilamine and prophenpyridamine.
3. Anti-inflammatories such as hydrocortisone, cortisone, dexamethasone 21-phosphate, fluocinolone, triamcinolone, medrysone, prednisolone, prednisolone 21-phosphate, and prednisolone acetate.
4. Decongestants such as phenylephrine, naphazoline, and tetrahydrazoline.
5. Miotics and antichlolinesterases such as pilocarpine, eserine salicylate, carbachol, diisopropyl fluorophosphate, phospholine iodide, demecarium bromide, physostigmin and neostigmin.
6. Mydriatics such as atropine sulfate, cyclopentolate, homatropine, scopolamine, tropicamide, eucatropine, and hydroxyamphetamine.
7. Sympathomimetics such as epinephrine.
8. Neuroleptics such as reserpine and chlorpromazine.
9. Estrogens such as estrone, 17*β*-estradiol, ethinyl estradiol, and diethyl stilbesterol.
10. Progestational agents such as progesterone, 19-norprogesterone, norethindrone, megestrol, melengestrol, chlormadinone, ethisterone, medroxyprogesterone, norethynodrel and 17*α-*hydroxy-progesterone.
11. Humoral agents such as the prostaglandins, for example, PGE1, PGE2, and PGF2.
12. Antipyretics such as ibuprofen, acetylsalicylic acid, sodium salicylate, and salicylamide.
13. Antispasmodics such as atropine, methantheline, papaverine, and methscopolamine bromide.
14. Cardioactive agents such as benzydroflumethiazide, flumethiazide, chlorothiazide, and aminotrate.

One type of preferred pharmaceutical compounds is a progestogen or a drug having a progestogenic activity. In particular the compound may be selected from the group of progesterone and its derivatives, cyproterone acetate, desogestrel, etonogestrel, levonorgestrel, lynestrenol, medroxyprogesterone acetate, norethisterone, norethisterone acetate, norgestimate, drospirenone, gestodene, 19-nor-17-hydroxy progesterone esters, 17*α-*ethinyltestosterone and derivatives thereof, 17*α*-ethinyl-19-nor-testosterone and derivatives thereof, ethynodiol diacetate, dydrogesterone, norethynodrel, allylestrenol, medrogestone, norgestrienone, ethisterone, dl-norgestrel or a mixture of at least two of the aforementioned compounds.

Another type of preferred pharmaceutical compound is a drug capable of preventing or suppressing endometrial bleeding. In particular the compound may be selected from the group of prostaglandin synthesis inhibitors, NSAIDs, inhibitors of leukotriene, oxytocin antagonists, pancreatic trypsin inhibitors, COX-inhibitors, antifibrinolytic drugs, estrogens, antiestrogens, aromatase inhibitors, cytokine inhibitors, glucocorticoids, progestogens with pronounced glucocorticoid acticity, danazol, gestrinone, angiogenesis inhibitors or a mixture of at least two of the aforementioned compounds.

It is possible to combine the progestogen or a drug having a progestogenic activity with the drug capable of preventing or suppressing endometrial bleeding. Particularly preferred is the combination of levonorgestrel with tranexamic acid, mefenamic acid, danazol or an angiogenesis inhibitor. This is useful in an intrauterine device.

Another type of preferred pharmaceutical compound is a calcium channel blocker, in particular nimodipine or nifedipine.

Another type of preferred pharmaceutical compound is a cytostatic agent such as cisplatin, rituximab, bevacizumab, trastuzumab, imatinib, lenalidomide, pemetrexed, bortezomib, cetuximab, leuprolein or abiraterone.

Lastly, opioid analgetics and non-opioid analgetics are also a type of preferred pharmaceutical compound.

The pharmaceutical compounds (drugs) can be in different forms, such as uncharged molecules, components of molecular complexes, or non-irritating, pharmacologically acceptable salts such as hydrochloride, hydrobromide, sulphate, phosphate, nitrate, borate, acetate, maleate, tartrate, salicylate, etc. For acidic drugs, salts of metals, amines, or organic cations (e.g., quaternary ammonium) can be employed. Furthermore, simple derivatives of the drugs (such as ethers, esters, amides, etc.) which have desirable retention and release characteristics but which are easily hydrolyzed by body pH, enzymes, etc., can be employed.

Also contemplated are a hydrogel according to the invention for use as a post-operative separator between internal organs of a human or an animal and a hydrogel according to the invention for use as a delayed-release formulation for the pharmaceutical compound, pesticide, herbicide, pheromone or combination of at least two of the aforementioned compounds distributed within the hydrogel.

Post-operative separators (adhesion barriers) can be used to reduce or prevent unwanted tissue adhesions in a patient after surgery by separating the internal tissues and organs while they heal. The prevention of intraabdominal adhesions is expressly contemplated.

In its use as a delayed release formulation the hydrogel can be viewed as a drug delivery device or system. Drug delivery systems of the invention can take a wide variety of shapes and forms for administering the drugs at controlled rates to different areas of the body. Thus, the invention includes external and internal drug-delivery systems such as skin patches, sublingual or buccal tablets, peroral dosage forms, implantates for releasing a drug in the tissues of a living organism, pessaries, prosthesis, artificial glands, vaginal or rectal suppositories, cervical rings, troches, drug-dispensing intrauterine devices and ocular inserts.

### Examples

The present invention will be further described with reference to the following figures and examples without wishing to be bound by them.

Desmodur LP DSB 3227 ("DSB 3227") designates a trifunctional NCO-terminated prepolymer with an NCO content of 2.6% (DIN EN ISO 11909) obtained from hexamethylene diisocyanate and a trifunctional poly(oxyethylene) polyol having an ethylene oxide content of 70 to 75 weight% and a number-average molecular weight of 4500 g/mol.

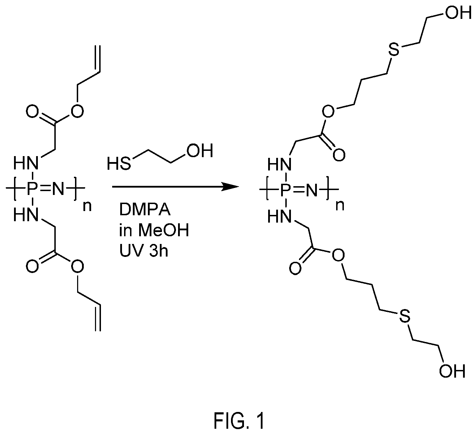

### Example 1: Polyphosphazene polyol via thiol-ene addition - Figure 1

1 g allylglycine polyphosphazene (prepared according to WO 2015/192158) was weighed into a UV-transparent vessel and dissolved in 10 mL MeOH. Then, 0.51 mL (7.28 mmol) mercaptoethanol was added to the solution. As photoinitiator, 0.01 g (0.04 mmol) 2,2-dimethoxy-2-phenylacetophenone (DMPA) was added and the solution purged with N₂ for 30 minutes. The solution was then irradiated for 3 hrs at 5 °C in a UV-reactor (254 nm). The volatiles were removed under vacuum at 40 °C and 337 mbar, followed by further drying under vacuum. ¹H-NMR DMSO-d₆: 1.83 (s 2H) 2.5 (s 4H) 3.52 (m 2H) 3.63 (m 2H) 4.09 (s 1H) 4.78 (s 1H) 7.63 (m 0.3H) ppm. ³¹P-NMR: 0.89 and 10.71 and ¹³C-NMR: 28.20; 28.83; 34.23; 42.95; 61.27; 63.50; 129-133; 172.76 ppm.

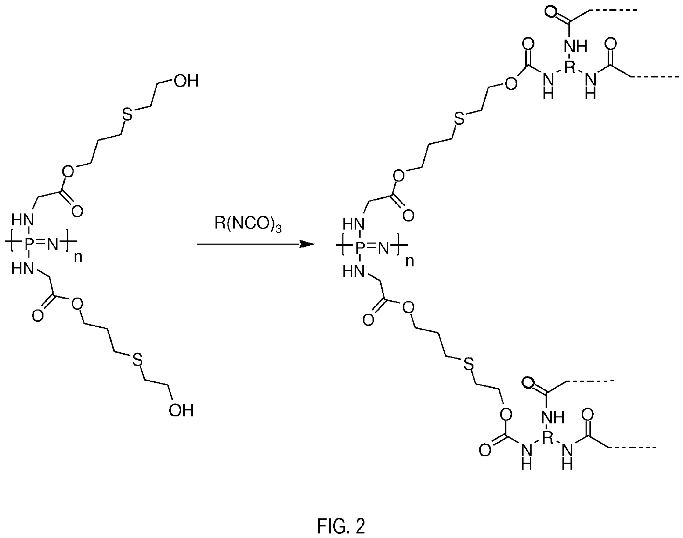

### Example 2: Polyurethane synthesis from polyphosphazene polyols and hydrogel - Figure 2

A 10% w/w solution of the polyphosphazene polyol of example 1 in DMSO was prepared. 0.57 mL of the solution was added to 0.5 g Desmodur LP DSB 3227 and stirred vigorously. Subsequently, the mixture was poured into a glass form with a thickness of 1 mm and dimensions of 10*10 cm. After evacuation of air, the reaction was allowed to proceed for 72 h at room temperature for gelation to occur. The reaction was quenched upon the addition of 5 mL MeOH. FTIR: 1667 C=O; 2269 N=C=O; 2865 C-H; 3505 N-H. Solid state ³¹P-NMR: 0.51 ppm. Soaking in 37 °C phosphate buffer (pH = 7.4) produced a hydrogel.

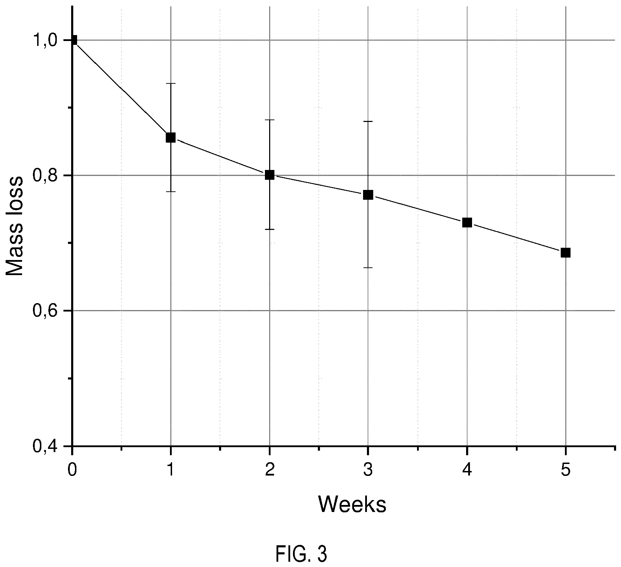

### Example 3: Degradation studies - Figure 3

For degradation studies, samples of hydrogels obtained according to example 2 were placed in a mechanical shaker in phosphate buffer pH 7.4 at 37 °C and dried and weighed at regular time intervals. The results are depicted in FIG. 3.

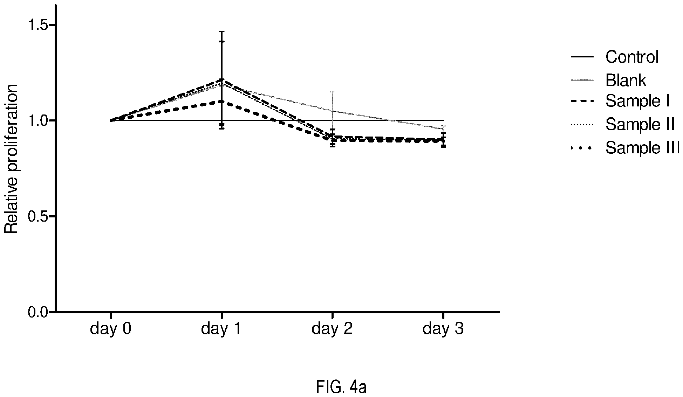

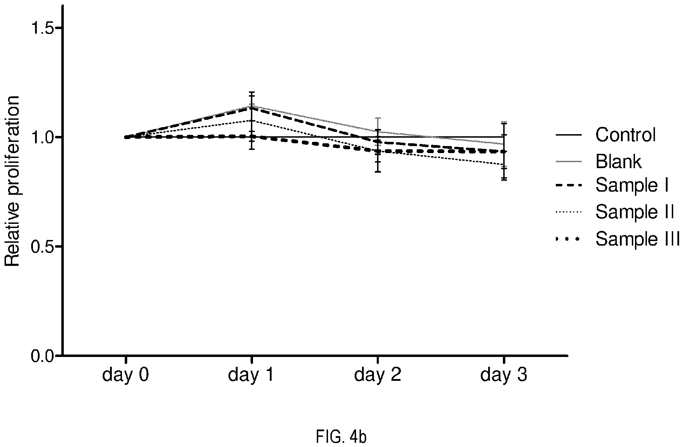

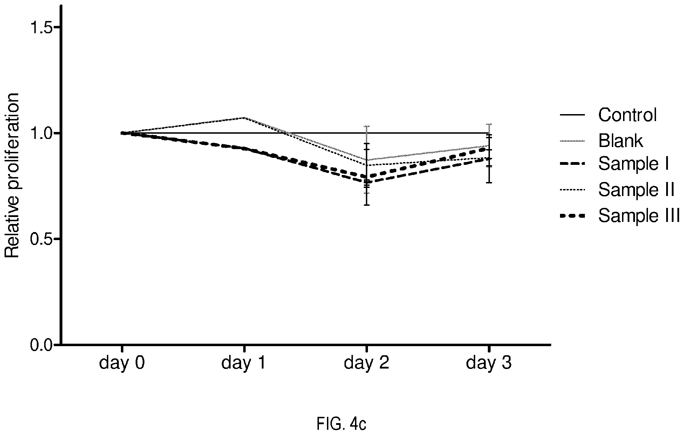

### Example 4: Cytotoxicity studies - Figures 4a to 4d

Cytotoxicity studies of the following selection of materials were carried out. "Ppz-OH" designates the polyphosphazene polyol of example 1.

| **Sample no.** | **Ratio (weight:weight)** | **Components** |
|---|---|---|
| Blank | 1:1 | DSB 3227:glycerol |
| Sample I | 1:1 | DSB 3227:Ppz-OH |
| Sample II | 1:2 | DSB 3227:Ppz-OH |
| Sample III | 1:0.5 | DSB 3227:Ppz-OH |

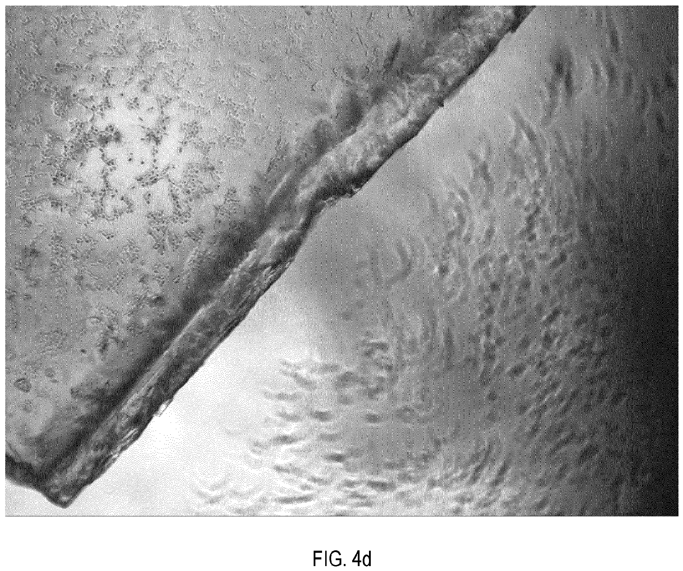

The hydrogels were tested against three cell lines: human embryonic kidney (HEK), normal dermal fibroblasts and normal vascular fibroblasts and were shown to have excellent biocompatibility. The results are depicted in FIGs. 4a to 4d. Studies of the supernatant for buffer immersed hydrogels showed no inhibition of cell proliferation after 24 h for all three tested cell lines (FIGs. 4a to 4c). After 48 and 72 hours, for all of the hydrogels (including the blank specimen) only very slight inhibition in proliferation is observed (FIGs. 4a to 4c). Contact assays showed good cell growth in contact with the hydrogels and hence the absence of toxicity. Direct growth was not possible on all of the hydrogels due to lack of binding, although even in these cases the cells continued to grow around the gels, suggesting a lack of any cytotoxicity (FIG. 4d).

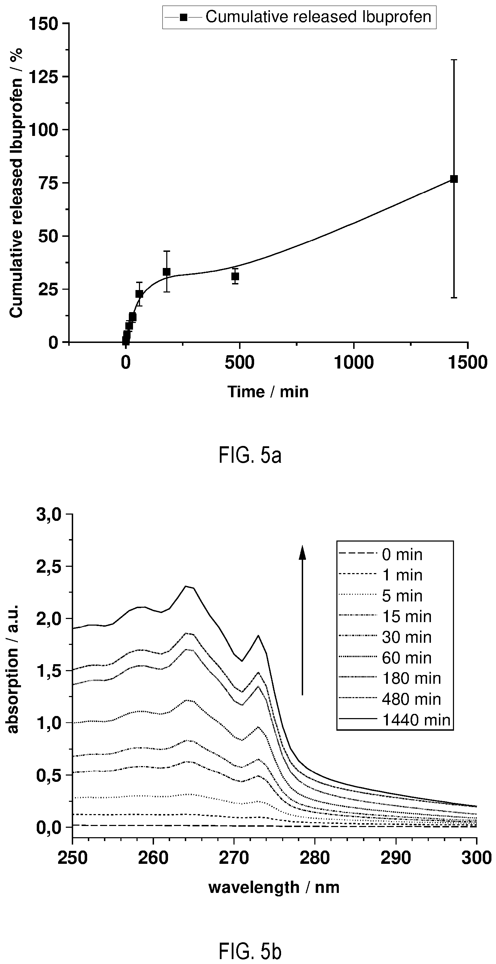

### Example 5: Release studies - Figures 5a to 5f

In this series of experiments three exemplary active pharmaceutical ingredients (APIs) having the international nonproprietary names (INNs) of ibuprofen, nimodipine and nifedipine were incorporated into hydrogels and their release was monitored.

Drug loading was conducted by in-situ gelation. To the gelation mixture of DSB 3227 (1.2877 g) and a solution of the polyphosphazene polyol of example 1 (0.185 g in 3.1 mL DMSO), API (ca. 200 mg) was added before mixing. After pouring the mixture in a culture dish, the gel was cured under vacuum for 48h. The gels were then soaked in DMSO:H₂O mixture (10 mL, 1:1 ratio). At certain time intervals samples (1 mL) were taken from the stirred solution and new buffer was added. These samples were measured by UV-Vis spectroscopy with the concentration of APIs released measured from calibrations curves for the free compounds. Where necessary, the samples were further diluted to achieve a value below 1 for this calculation.

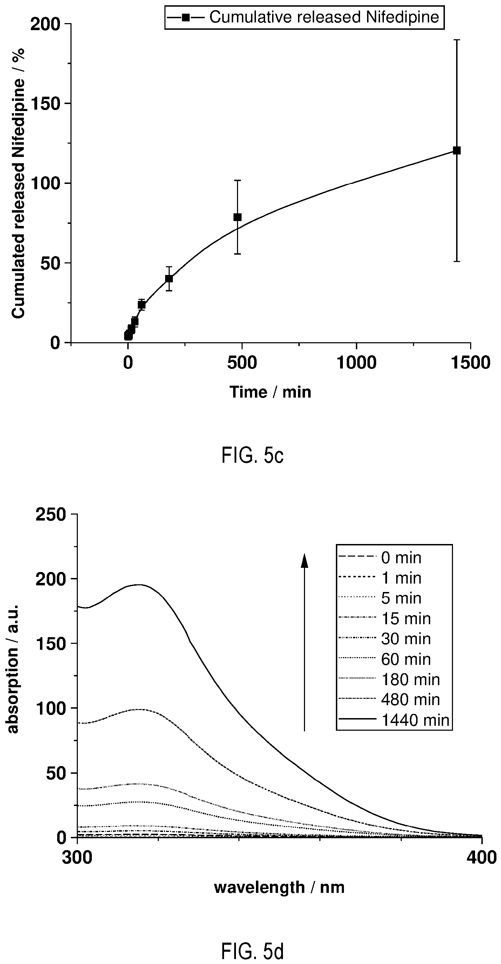

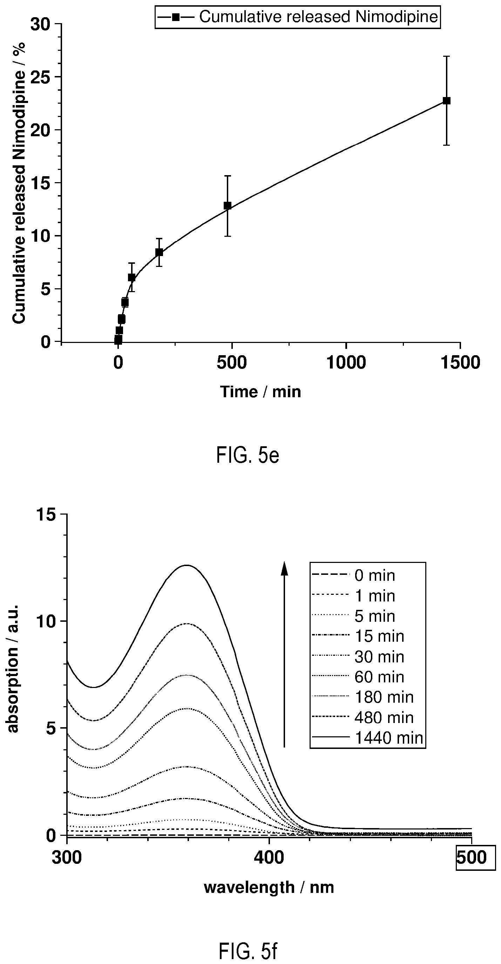

FIG. 5a and 5b show cumulative release profiles and exemplary UV-Vis spectra, respectively, for the hydrogel containing ibuprofen. FIG. 5c and 5d show cumulative release profiles and exemplary UV-Vis spectra, respectively, for the hydrogel containing nifedipine. FIG. 5e and 5f show cumulative release profiles and exemplary UV-Vis spectra, respectively, for the hydrogel containing nimodipine. In Fig. 5d the apparent inconsistency in the order of the release curves - the absorption curve for 0 minutes has higher absorption values than the curves for 1 minute and for 5 minutes - is attributed to unavoidable experimental uncertainties when measuring UV-Vis spectra at low concentrations of the analyte.

## Claims

1. A polyphosphazene comprising the structural unit according to general formula (I): 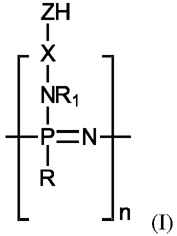 where:
each radical ZH is, independent of other radicals ZH, a group comprising an NCO-reactive hydrogen atom;
each radical X is, independent of other radicals X, an organic rest;
each radical R₁ is, independent of other radicals Ri, hydrogen or an organic radical;
each radical R is, independent of other radicals R, halogen, an organic radical or the radical group NR₁-X-ZH,
n is a positive integer and
wherein at least one radical X comprises one of the following groups: -B-CH₂-CH₂-, -Si-CH₂-CH₂- or -S-CH₂-CH₂-, wherein the -CH₂-CH₂- groups are located between the B, Si or S atoms and an N atom to which radicals R₁ are bond.

2. The polyphosphazene according to claim 1, wherein at least one radical ZH is a hydroxyl group, a primary amino group or a secondary amino group.

3. The polyphosphazene according to claim 1 or 2, wherein at least one radical X comprises one of the following groups: -(CH₂)ₘ-B-, -(CH₂)ₘ-Si- or -(CH₂)ₘ-S- with m being an integer from 1 to 16, wherein the -(CH₂)ₘ- groups are located between the B, Si or S atoms and a radical ZH.

4. The polyphosphazene according to one of claims 1 to 3, wherein at least one radical X-ZH comprises the group -(CH₂)ₘ-C(=O)-O-(CH₂)ₒ-S-(CH₂)ₚ-OH or -(CH₂)ₘ-C(=O)-O-(CH₂)ₒ-S-(CH₂)ₚ-NH₂ with m, o and p independently being an integer from 1 to 16.

5. The polyphosphazene according to one of claims 1 to 4, wherein the radical group NR₁-X comprises an ester of an α-amino acid as a structural unit.

6. A method of manufacturing a polyphosphazene comprising the structural unit according to general formula (II), the method comprising reacting a C=C double bond-carrying compound comprising the structural unit of general formula (III) with an element-hydrogen bond-carrying compound according to general formula H-E-L-ZH: 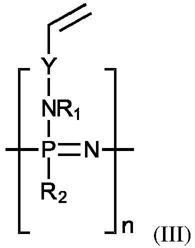 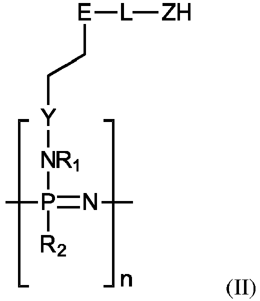 where:
each radical E is, independent of other radicals E, B, Si or S;
each radical L is, independent of other radicals L, an organic radical;
each radical ZH is, independent of other radicals ZH, a group comprising an NCO-reactive hydrogen atom;
each radical R₁ is, independent of other radicals Ri, hydrogen or an organic radical;
each radical R₂ is, independent of other radicals R₂, halogen, an organic radical or the radical group NR₁-Y-;
each radical Y is, independent of other radicals Y, an organic rest and
n is a positive integer.

7. A polyurethane polymer obtained by reacting a polyphosphazene (I) according to one of claims 1 to 5 with a polyisocyanate.

8. A method of manufacturing a polyurethane polymer comprising the step of reacting a polyphosphazene (I) according to one of claims 1 to 5 with a polyisocyanate.

9. The polymer of claim 7 or the method of claim 8, wherein the polyisocyanate is an NCO-terminated prepolymer obtained by the reaction of a monomeric polyisocyanate and a polyether polyol.

10. The polymer of claim 9 or the method of claim 9, wherein the polyether polyol is a random copolymer of an alkylene oxide and a comonomer selected from: lactides, glycolides, cyclical dicarboxylic acid anhydrides and mixtures of at least two of the aforementioned compounds.

11. A hydrogel obtained by contacting a polyphosphazene (I) according to one of claims 1 to 5 and/or a polyurethane according to claim 7 with water.

12. The hydrogel of claim 11, further comprising, distributed within the hydrogel, a pharmaceutical compound, a pesticide, a herbicide, a pheromone or a combination of at least two of the aforementioned compounds.

13. A hydrogel according to claim 11 for use as a post-operative separator between internal organs of a human or an animal.

14. A hydrogel according to claim 12 for use as a delayed-release formulation for the pharmaceutical compound, pesticide, herbicide, pheromone or combination of at least two of the aforementioned compounds distributed within the hydrogel.

## Patentansprüche

1. Polyphosphazen, umfassend die Struktureinheit gemäß der allgemeinen Formel (I): 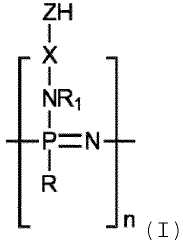 wobei:
jeder Rest ZH unabhängig von anderen Resten ZH für eine Gruppe mit einem NCO-reaktiven Wasserstoffatom steht;
jeder Rest X unabhängig von anderen Resten X für einen organischen Rest steht;
jeder Rest R₁ unabhängig von anderen Resten R₁ für Wasserstoff oder einen organischen Rest steht;
jeder Rest R unabhängig von anderen Resten R für Halogen, einen organischen Rest oder die Restegruppe NR₁-X-ZH steht,
n für eine positive ganze Zahl steht und
wobei mindestens ein Rest X eine der folgenden Gruppen umfasst: -B-CH₂-CH₂-, -Si-CH₂-CH₂- oder -S-CH₂-CH₂-, wobei sich die -CH₂-CH₂-Gruppen zwischen dem B-, Si- bzw. S-Atom und einem N-Atom, an das Reste R₁ gebunden sind, befinden.

2. Polyphosphazen nach Anspruch 1, wobei der mindestens eine Rest ZH für eine Hydroxylgruppe, eine primäre Aminogruppe oder eine sekundäre Aminogruppe steht.

3. Polyphosphazen nach Anspruch 1 oder 2, wobei der mindestens eine Rest X eine der folgenden Gruppen umfasst: -(CH₂)ₘ-B-, -(CH₂)ₘ-Si- oder -(CH₂)ₘ-S-, wobei m für eine ganze Zahl von 1 bis 16 steht, wobei sich die -(CH₂)ₘ-Gruppen zwischen dem B-, Si- bzw. S-Atom und einem Rest ZH befinden.

4. Polyphosphazen nach einem der Ansprüche 1 bis 3, wobei mindestens ein Rest X-ZH die Gruppe -(CH₂)ₘ-C(=O)-O-(CH₂)ₒ-S-(CH₂)ₚ-OH oder -(CH₂)ₘ-C(=O)-O-(CH₂)ₒ-S-(CH₂)ₚ-NH₂ umfasst, wobei m, o und p unabhängig für eine ganze Zahl von 1 bis 16 stehen.

5. Polyphosphazen nach einem der Ansprüche 1 bis 4, wobei die Restegruppe NR₁-X einen Ester einer α-Aminosäure als Struktureinheit umfasst.

6. Verfahren zur Herstellung eines Polyphosphazens, das die Struktureinheit gemäß der allgemeinen Formel (II) umfasst, wobei das Verfahren das Umsetzen einer eine C=C-Doppelbindung tragenden Verbindung, die die Struktureinheit der allgemeinen Formel (III) umfasst, mit einer eine Element-Wasserstoff-Bindung tragenden Verbindung gemäß der allgemeinen Formel H-E-L-ZH umfasst: 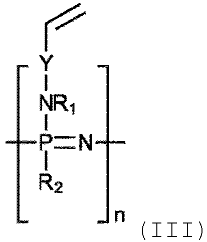 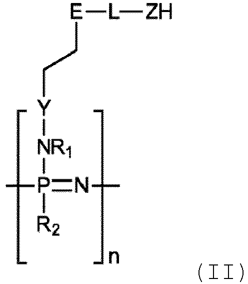 wobei:
jeder Rest E unabhängig von anderen Resten E für B, Si oder S steht;
jeder Rest L unabhängig von anderen Resten L für einen organischen Rest steht;
jeder Rest ZH unabhängig von anderen Resten ZH für eine Gruppe mit einem NCO-reaktiven Wasserstoffatom steht;
jeder Rest R₁ unabhängig von anderen Resten R₁ für Wasserstoff oder einen organischen Rest steht;
jeder Rest R₂ unabhängig von anderen Resten R₂ für Halogen, einen organischen Rest oder die Restegruppe NR₁-Y- steht;
jeder Rest Y unabhängig von anderen Resten Y für einen organischen Rest steht und
n für eine positive ganze Zahl steht.

7. Polyurethanpolymer, erhalten durch Umsetzen eines Polyphosphazens (I) nach einem der Ansprüche 1 bis 5 mit einem Polyisocyanat.

8. Verfahren zur Herstellung eines Polyurethanpolymers, umfassend den Schritt des Umsetzens eines Polyphosphazens (I) nach einem der Ansprüche 1 bis 5 mit einem Polyisocyanat.

9. Polymer nach Anspruch 7 oder Verfahren nach Anspruch 8, wobei es sich bei dem Polyisocyanat um ein durch die Umsetzung eines monomeren Polyisocyanats und eines Polyetherpolyols erhaltenes NCO-terminiertes Prepolymer handelt.

10. Polymer nach Anspruch 9 oder Verfahren nach Anspruch 9, wobei es sich bei dem Polyetherpolyol um ein statistisches Copolymer von einem Alkylenoxid und einem aus Lactiden, Glykoliden, cyclischen Dicarbonsäureanhydriden und Mischungen von mindestens zwei der oben aufgeführten Verbindungen ausgewählten Comonomer handelt.

11. Hydrogel, erhalten durch Inkontaktbringen eines Polyphosphazens (I) nach einem der Ansprüche 1 bis 5 und/oder eines Polyurethans nach Anspruch 7 mit Wasser.

12. Hydrogel nach Anspruch 11, ferner umfassend, in dem Hydrogel verteilt, eine pharmazeutische Verbindung, ein Pestizid, ein Herbizid, ein Pheromon oder eine Kombination von mindestens zwei der oben aufgeführten Verbindungen.

13. Hydrogel nach Anspruch 11 zur Verwendung als postoperativer Separator zwischen inneren Organen eines Menschen oder eines Tiers.

14. Hydrogel nach Anspruch 12 zur Verwendung als Formulierung mit verzögerter Freisetzung für die pharmazeutische Verbindung, das Pestizid, das Herbizid, das Pheromon oder die Kombination von mindestens zwei der oben aufgeführten Verbindungen, die bzw. das in dem Hydrogel verteilt ist.

## Revendications

1. Polyphosphazène comprenant le motif structural selon la formule générale (I) : 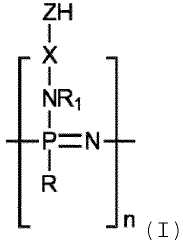 où :
chaque radical ZH est, indépendamment des autres radicaux ZH, un groupe comprenant un atome d'hydrogène réactif avec NCO ;
chaque radical X est, indépendamment des autres radicaux X, un radical organique ;
chaque radical R₁ est, indépendamment des autres radicaux R₁, hydrogène ou un radical organique ;
chaque radical R est, indépendamment des autres radicaux R, halogène, un radical organique ou le groupe radical NR₁-X-ZH,
n est un entier positif et
dans lequel au moins un radical X comprend l'un des groupes suivants : -B-CH₂-CH₂-, -Si-CH₂-CH₂- ou -S-CH₂-CH₂-, dans lequel les groupes -CH₂-CH₂- sont situés entre les atomes B, Si ou S et un atome N auquel les radicaux R₁ sont liés.

2. Polyphosphazène selon la revendication 1, dans lequel au moins un radical ZH est un groupe hydroxyle, un groupe amino primaire ou un groupe amino secondaire.

3. Polyphosphazène selon la revendication 1 ou 2, dans lequel au moins un radical X comprend l'un des groupes suivants : -(CH₂)ₘ-B-, -(CH₂)ₘ-Si- ou -(CH₂)ₘ-S-, m étant un entier compris de 1 à 16, dans lequel les groupes -(CH₂)ₘ- sont situés entre les atomes B, Si ou S et un radical ZH.

4. Polyphosphazène selon l'une des revendications 1 à 3, dans lequel au moins un radical X-ZH comprend le groupe -(CH₂)ₘ-C(=O)-O-(CH₂)_{c}-S-(CH₂)ₚ-OH ou -(CH₂)ₘ-C(=O)-O-(CH₂)ₒ-S-(CH₂)ₚ-NH₂, m, o et p étant indépendamment des entiers compris de 1 à 16.

5. Polyphosphazène selon l'une des revendications 1 à 4, dans lequel le groupe radical NR₁-X comprend un ester d'acide α-aminé en tant que motif structural.

6. Procédé de fabrication d'un polyphosphazène comprenant le motif structural selon la formule générale (II), le procédé comprenant la mise en réaction d'un composé portant une double liaison C=C comprenant le motif structural de formule générale (III) avec un composé portant une liaison élément-hydrogène selon la formule générale H-E-L-ZH : 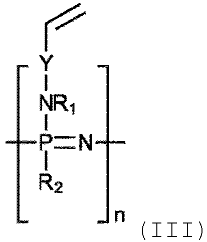 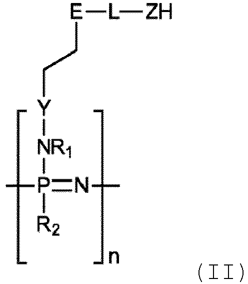 où :
chaque radical E est, indépendamment des autres radicaux E, B, Si ou S ;
chaque radical L est, indépendamment des autres radicaux L, un radical organique ;
chaque radical ZH est, indépendamment des autres radicaux ZH, un groupe comprenant un atome d'hydrogène réactif avec NCO ;
chaque radical R₁ est, indépendamment des autres radicaux R₁, hydrogène ou un radical organique ;
chaque radical R₂ est, indépendamment des autres radicaux R₂, halogène, un radical organique ou le groupe radical NR₁-Y- ;
chaque radical Y est, indépendamment des autres radicaux Y, un radical organique et
n est un entier positif.

7. Polymère de polyuréthane obtenu en mettant en réaction un polyphosphazène (I) selon l'une des revendications 1 à 5 avec un polyisocyanate.

8. Procédé de fabrication d'un polymère de polyuréthane comprenant l'étape de mise en réaction d'un polyphosphazène (I) selon l'une des revendications 1 à 5 avec un polyisocyanate.

9. Polymère selon la revendication 7 ou procédé selon la revendication 8, dans lequel le polyisocyanate est un prépolymère à terminaison NCO obtenu par la réaction d'un polyisocyanate monomérique et d'un polyéther polyol.

10. Polymère selon la revendication 9 ou procédé selon la revendication 9, dans lequel le polyéther polyol est un copolymère aléatoire d'oxyde d'alkylène et un comonomère sélectionné parmi : lactides, glycosides, anhydrides d'acides dicarboxyliques cycliques et mélanges d'au moins deux des composés susmentionnés.

11. Hydrogel obtenu en mettant en contact un polyphosphazène (I) selon l'une des revendications 1 à 5 et/ou un polyuréthane selon la revendication 7 avec de l'eau.

12. Hydrogel selon la revendication 11, comprenant en outre, distribué dans l'hydrogel, un composé pharmaceutique, un pesticide, un herbicide, une phéromone ou une combinaison d'au moins deux des composés susmentionnés.

13. Hydrogel selon la revendication 11 pour une utilisation comme séparateur postopératoire entre des organes internes d'un humain ou d'un animal.

14. Hydrogel selon la revendication 12 pour une utilisation comme formulation à libération retardée pour le composé pharmaceutique, le pesticide, l'herbicide, la phéromone ou une combinaison d'au moins deux des composés susmentionnés distribués dans l'hydrogel.
